# EUROPEAN PATENT SPECIFICATION

(11) **EP 1 741 680 B1**
(45) Date of publication and mention of the grant of the patent: **03.04.2019**
(21) Application number: 05710236.0
(22) Date of filing: 16.02.2005
(51) Int. Cl.: B65G 49/06, C03B 33/03

(54) **SYSTEM FOR CUTTING PLATE GLASS**
SYSTEM ZUM SCHNEIDEN VON FLACHGLAS
SYSTEME POUR COUPER DU VERRE GLACE

(30) Priority: 17.02.2004 JP 2004039974
(43) Date of publication of application: 10.01.2007
(73) Proprietor: KAWASAKI JUKOGYO KABUSHIKI KAISHA, Chuo-ku Kobe-shi Hyogo 650-8670 (JP); Corning Japan K.K., 1-11-44, Akasaka, Minato-ku Tokyo 107-0052 (JP)
(72) Inventor: TSUJITA, Keiji, Kobe-Shi, Hyogo 651-2102 (JP); YOKOYAMA, Takaaki, Kobe-shi, Hyogo 651-2411 (JP); AOKI, Yoshiaki, Kobe-shi, Hyogo 651-2401 (JP); OHTSUBO, Akihiro, Kakegawa-shi, Shizuoka 437-1397 (JP)
(74) Representative: Leinweber & Zimmermann
(86) International application number: PCT/JP2005/002286
(87) International publication number: WO 2005/077850

(56) References cited:
- WO-A1-91/03434
- JP-A- 2000 281 372
- JP-A- 2003 034 544
- JP-A- 2003 170 419
- JP-A- 2003 306 338
- JP-A- 2004 026 569
- US-A- 3 181 757
- US-A- 3 279 664

## Description

### Technical Field

The present invention relates to a glass plate cutting system. More particularly, the present invention relates to a glass plate cutting system that is configured to apply a bending moment to vent the glass plates along venting scribe lines formed at predetermined locations on the surfaces thereof while conveying the glass plates.

### Background Art

The conventional glass plate cutting system is configured to convey a glass plate G to be vented to a venting device by a belt conveyor to vent the glass sheet G along predetermined scribe lines (see e.g., patent document 1). The belt conveyor is driven by a servo motor. A belt is provided with a number of holes connected to a vacuum system to suction the glass plate G The glass plate G is positioned on the belt conveyor and is conveyed to the venting device, which aligns a front end and a rear end of the glass plate G with a venting portion by moving the conveyor back and forth, and vents the glass plate G For the conveyor, a distance over which the glass plate G is conveyed to the venting device is pre-stored in a controller, and a servo motor is controlled by a count of pulse signals from an encoder. With such a configuration, the glass plate G is conveyed to a predetermined position of the venting device.

In the venting device, the belt conveyor is used to convey the glass plate G The glass plate G is conveyed by a friction between the belt and the glass plate G Whereas the belt conveyor is controlled by the servo motor, rapid acceleration and deceleration or high speed movement causes a slip to occur between the belt and the glass plate G, making it difficult to maintain the alignment. In addition, the glass plate G might be tilted because of a degree of parallelization or a speed difference while being transported from a conveyor to an adjacent conveyor.

Because the glass plate G is conveyed by the belt conveyor, it is required to pass through respective units arranged in series. The above publication discloses trimming of the front end and the rear end in the direction in which the glass plate G is conveyed. It is necessary to position the glass plate G in the direction perpendicular to the direction in which the glass plate G is conveyed, for trimming right and left ends of the glass plate G, which is difficult to accomplish merely by forward and backward movement of the belt conveyor. Japanese Patent Publication No. Hei. 253336 JP 2003-306338 refers to a system for cutting plate glass. The system comprises a walking beam for conveying the plate glass arranged in an aligned position at the upstream end of the walking beam.

### Disclosure of the Invention

### Problems to be Solved by the Invention

The present invention has been developed to solve the above mentioned problems, and an object of the present invention is to provide a glass plate cutting system that is capable of positioning the glass plates precisely and of conveying the glass plates at a high speed.

### Means for Solving the Problem

A glass plate cutting system of the present invention comprises an alignment unit configured to position a glass plate with respect to the cutting system in a Y-axis-direction in which the glass plate is conveyed and in a X-axis-direction perpendicular to the Y-axis-direction in a substantially horizontal plane; a venting device configured to vent the glass plate along a venting scribe line formed on the glass plate; and a Y-axis-direction conveyance device configured to convey the glass plate from the alignment unit in the direction in which the glass plate is conveyed in the cutting system; wherein the Y-axis-direction conveyance device includes a first holding unit that holds the glass plate and a first servo transport unit that transports the first holding unit; and wherein the first servo transport unit includes a rail extending in parallel with a machine center in the Y-axis-direction extending through the alignment unit, and is configured to transport the first holding unit along the rail, and the alignment unit and the venting device have a common reference line extending in the Y-axis-direction.

In accordance with the cutting system, the alignment unit positions the glass plate with respect to the cutting system in the X-axis-direction and in the Y-axis-direction, and in this state, the first servo transport unit transports the glass plate to a predetermined position. Since the alignment unit and the venting device located downstream in the direction in which the glass plate is conveyed have the common reference line, positioning made by the alignment unit is reproduced precisely.

In the glass plate cutting system wherein the first servo transport unit includes a servo motor and a feeder configured to be driven by the servo motor, it is preferable that the first holding unit is able to move the glass plate correctly over a set distance with a simple construction.

In the glass plate cutting system wherein the first holding unit includes a vacuum suction pad that suctions a surface of the glass plate and an up-down element that moves up and down the suction pad, the glass plate can be transported in a lifted position. So, it is possible to increase a movement speed as compared to where the glass plate is conveyed by the belt conveyor or the like in a conventional method. In addition, the glass plate does not slip even if rapid acceleration and deceleration or high-speed transportation occurs. Because the alignment is maintained while the glass plate is transported from one processing unit to another processing unit, a cycle time can be reduced.

In the glass plate cutting system wherein the alignment unit includes a suction element that holds the glass plate, a drive cylinder that moves the suction element back and forth in the X-axis-direction, a Y-axis-direction transport element that transports the drive cylinder in the Y-axis-direction, a frame to which the Y-axis-direction transport unit is mounted,
a X-axis-direction transport unit that transports the frame in the X-axis-direction, and a stopper that stops movement of the glass plate in the X-axis-direction, correct positioning can be accomplished. In accordance with the alignment unit, for example, the X-axis-direction transport unit first transports the frame to a predetermined position in the X-axis-direction to set the stopper in a predetermined position. Then, the suction element holds the glass plate being carried into the system, and the drive cylinder moves the held glass plate in the X-axis-direction to bring the glass plate into contact with the stopper. Thus, positioning of the glass plate in the X-axis-direction is accomplished. Thereafter, for example, the sensor or the stopper sets the position of the glass plate in the Y-axis-direction, and the Y-axis-direction transport unit transports the glass plate to that position. Thus, positioning of the glass plate in the Y-axis-direction is accomplished. In this manner, the glass plates of different sizes can be positioned automatically based on input data.

In the glass plate cutting system wherein the venting device includes a X-axis-direction venting unit that vents the glass plate to be vented along a X-axis-direction venting scribe line and a Y-axis-direction venting unit that vents the glass plate G along a Y-axis-direction venting scribe line, and the X-axis-direction venting unit includes a venting element configured to be moved in the Y-axis-direction and the Y-axis-direction venting unit includes a venting element configured to be moved in the X-axis-direction, the venting element moves in the
Y-axis-direction and in the X-axis-direction according to the size of the glass plate conveyed. To determine the venting position of the glass plate in the X-axis-direction, the first servo transport unit of the Y-axis-direction conveyance device moves the glass plate to the venting position for the X-axis-direction venting unit.

The glass plate cutting system may further comprise a X-axis-direction conveyance device configured to carry out the glass plate from the Y-axis-direction venting unit in the X-axis-direction, wherein the X-axis-direction conveyance device may include a second holding unit that holds the glass plate and a second servo transport unit that transports the second holding unit. In this system, the alignment unit positions the glass plate and the second servo transport unit carries out the glass plate placed in a correct position in the Y-axis-direction venting unit in the X-axis-direction. Therefore, the positioning made in the Y-axis-direction venting unit is reproduced precisely if a unit is mounted adjacent or apart from the Y-axis-direction venting unit in the X-axis-direction.

The glass plate cutting system may further comprise an inspection unit that is located adjacent the Y-axis-direction venting unit in the X-axis-direction and is configured to inspect the glass plate whether or not the glass plate has a defect; wherein the X-axis-direction conveyance device may be configured to convey the glass plate from the Y-axis-direction venting unit to the inspection unit; and wherein the Y-axis-direction venting unit and the inspection unit may have a common reference line extending in the X-axis-direction. In this system, the alignment unit positions the glass plate and the second servo transport unit transports the glass plate placed in a correct position in the Y-axis-direction venting unit to the inspection unit. Since the alignment unit and the inspection unit located downstream have the common reference line, positioning made by the alignment unit and the Y-axis-direction venting unit is reproduced precisely.

### Effects of the Invention

In accordance with the present invention, since precise positioning is made for the glass plate to be conveyed and a speed at which the glass plate is conveyed is high, processing efficiency in the whole system is improved. Once the alignment unit located upstream positions the glass plate, the processing units located in downstream stages need not re-position the glass plate.

### Brief Description of the Drawings

Fig. 1 is a plan view schematically showing an embodiment of a glass plate cutting system of the present invention;
Fig. 2 is a side view schematically showing the cutting system of Fig. 1;
Fig. 3(a) is a plan view showing a glass plate to be vented by the cutting system of Fig. 1 along with scribe lines and Fig. 3(b) is a plan view showing the glass plate G after trimming;
Fig. 4(a) is a plan view showing an alignment unit in the cutting system of Fig. 1; and Fig. 4(b) is a side view of the cutting system of Fig. 4(a);
Fig. 5 is a perspective view showing a Y-axis-direction conveyance device and a X-axis-direction conveyance device in the cutting system of Fig. 1;
Fig. 6(a) is a plan view showing the Y-axis-direction conveyance device in the cutting system of Fig. 1, and Fig. 6(b) is a side view of the Y-axis-direction conveyance device of Fig. 6(a);
Fig. 7(a) is a plan view showing a X-axis-direction trimming unit in the cutting system of Fig. 1, and Fig. 7(b) is a side view of the X-axis-direction trimming unit of Fig. 7(a);
Fig. 8(a) is a plan view showing a film removing unit in the cutting system of Fig. 1; and Fig. 8(b) is an enlarged view taken in the direction of arrows along line VIII - VIII of the film removing unit of Fig. 8(a);
Fig. 9(a) is a plan view showing a Y-axis-direction venting unit in the cutting system of Fig. 1 and Fig. 9(b) is a rear view of the Y-axis-direction venting unit of Fig. 9(a); and
Fig. 10(a) is a plan view showing the X-axis-direction conveyance device and an inspection unit in the cutting system of Fig. 1, and Fig. 10(b) is a side view of the X-axis-direction conveyance device and the inspection unit of Fig. 10(a).

### Explanation of Reference Numerals

- 1: cutting system
- 2: alignment unit
- 3: X-axis-direction trimming unit
- 4: film removing unit
- 5: Y-axis-direction venting unit
- 6: inspection unit
- 7: carry-out position
- 8: Y-axis-direction conveyance device
- 9: X-axis-direction conveyance device
- 10: belt conveyor
- 11: suction pad
- 12: vertical cylinder
- 13: X-cylinder
- 14: Y-axis-direction direct-advance actuator
- 15: frame
- 16: X-axis-direction direct-advance actuator
- 17: positioning roller
- 18: sensor
- 19: holding unit
- 20: Y-axis-direction direct-advance actuator
- 20a: arm
- 21: pad frame
- 21a: suction pad
- 22: drive cylinder
- 23: front pair
- 23a: venting element
- 23b: support element
- 23c: suction holes
- 24: rear pair
- 24a: venting element
- 24b: support element
- 24c: suction hole
- 25: receiver bar
- 26: Y-axis-direction direct-advance actuator
- 27a, 27b: drive cylinder
- 28a, 28b: actuator
- 29: pivot arm
- 29a: rotational shaft
- 29b: motor
- 29c: pinch
- 30a: feed roller
- 30b: rotational shaft
- 30c: motor
- 30d: timing belt
- 31a: pinch roller
- 31b: rotational shaft
- 31c: pinch arm
- 31d: lever
- 32: drive cylinder
- 33: left pair
- 33a: venting element
- 33b: support element
- 33c: suction hole
- 34: right pair
- 34a: venting element
- 34b: support element
- 34c: suction hole
- 35: X-axis-direction direct-advance actuator
- 36: venting bar
- 36a: drive cylinder
- 37: support bar
- 37a: suction member
- 38: holding unit
- 39: X-axis-direction direct-advance actuator
- 40: pad frame
- 40a: suction pad
- 41: drive cylinder
- 42: darkroom
- 43: receiver
- 44: actuator
- 45a, 45b: fixed plate
- 100: controller
- B: glass plate product
- F: protection film
- G: glass plate
- L: venting scribe line
- La, Lb: trimming scribe line

### Best Mode for Carrying Out the Invention

Hereinafter, an embodiment of a glass plate cutting system of the present invention will be described with reference to the accompanying drawings.

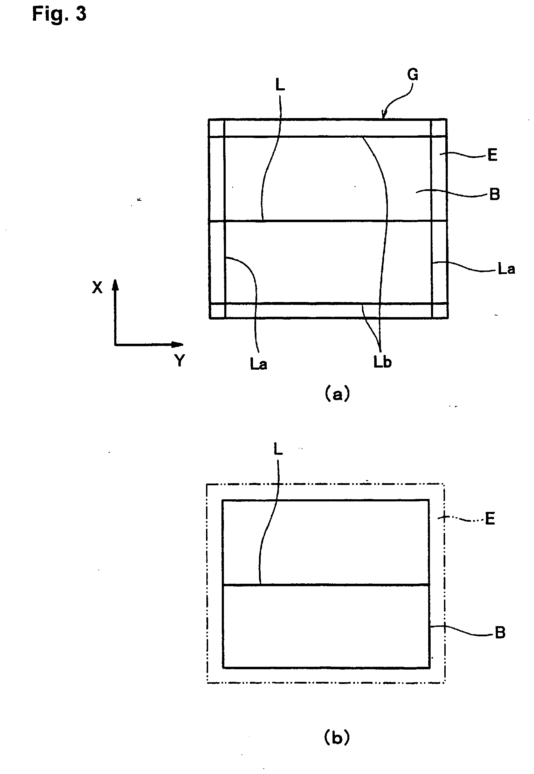

As shown in Fig. 3(a), a cutting system 1 is constructed to scribe trimming scribe lines La and Lb and a venting scribe line L in a sheet grass G and to apply a venting moment to opposite sides of the glass plate G with respect to the scribe lines La, Lb, and L to thereby vent the glass plate G along these scribe lines into a predetermined size. As shown in Fig. 3(b), the glass plate G is first subjected to trimming to remove a peripheral edge portion E in a predetermined shape, and then is vented along the venting scribe line L, thereby obtaining a glass plate product B of a predetermined dimension and a predetermined shape.

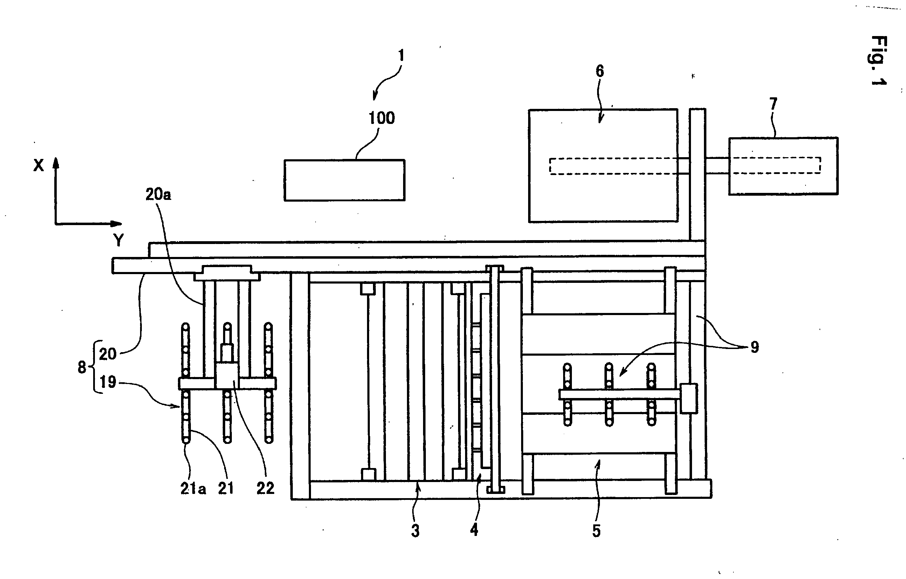

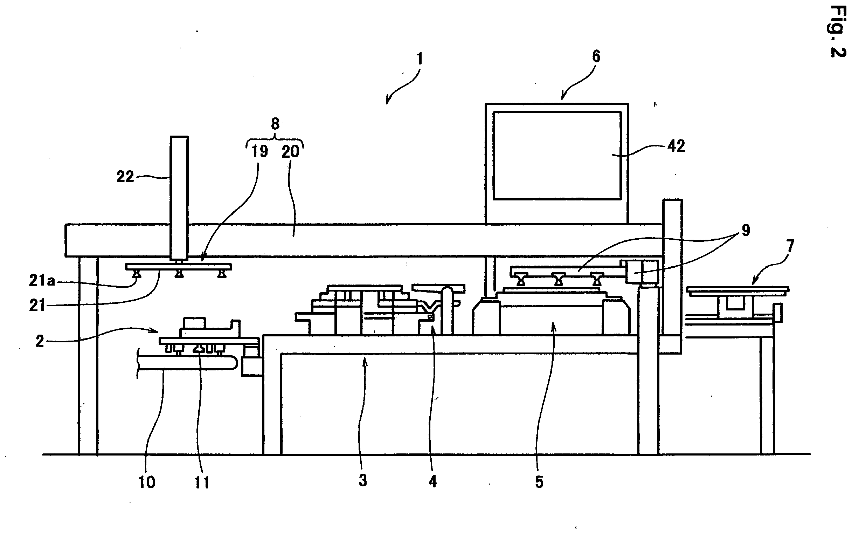

As shown in Fig. 1 and 2, the cutting system 1 includes, from upstream side in the direction in which the glass plate G is conveyed, an alignment unit 2 configured to determine an initial position of the glass plate G to be vented (hereinafter simply referred to as glass plate G) with respect to the cutting system 1, a X-axis-direction trimming unit 3 configured to trim front and rear ends of the glass plate G, a film removing unit 4 configured to remove a protection film bonded to a lower surface of the glass plate G, a Y-axis-direction venting unit 5 that is configured to trim right and left opposite sides of the glass plate G and vent the glass plate G in Y-axis-direction, an inspection unit 6 configured to inspect the glass plate G to detect whether or not the glass plate G has a defect, a carry-out position 7 on which the glass plate G, after inspected, is temporarily placed to be carried out to a downstream stage, a Y-axis-direction conveyance device 8 configured to convey the glass plate G from the alignment unit 2 to the X-axis-direction trimming unit 3 and to the Y-axis-direction venting unit 5, and a X-axis-direction conveyance device 9 configured to convey the glass plate G from the Y-axis-direction venting unit 5 to the inspection unit 6, which are arranged in this order. The cutting system 1 further includes a controller 100 configured to control an operation of the cutting system 1. The X-axis-direction trimming unit 3 and the Y-axis-direction venting unit 5 constitute a venting device of the glass plate G As used herein, the Y-axis-direction refers to the direction in which the glass plate G is conveyed to the Y-axis-direction venting unit 5 and the X-axis-direction refers to a direction perpendicular to the Y-axis-direction within a horizontal plane.

Although not shown, the cutting system 1 further includes, on the upstream side, a crate, a glass ejector unit, an agreeable paper removing unit, a scribing unit of venting scribe lines, and a glass transport unit that transports the glass plate G to the alignment unit 2. The cutting system 1 further includes, on downstream side, a sorting robot, a conveyor that conveys the glass plate G to a downstream stage, etc.

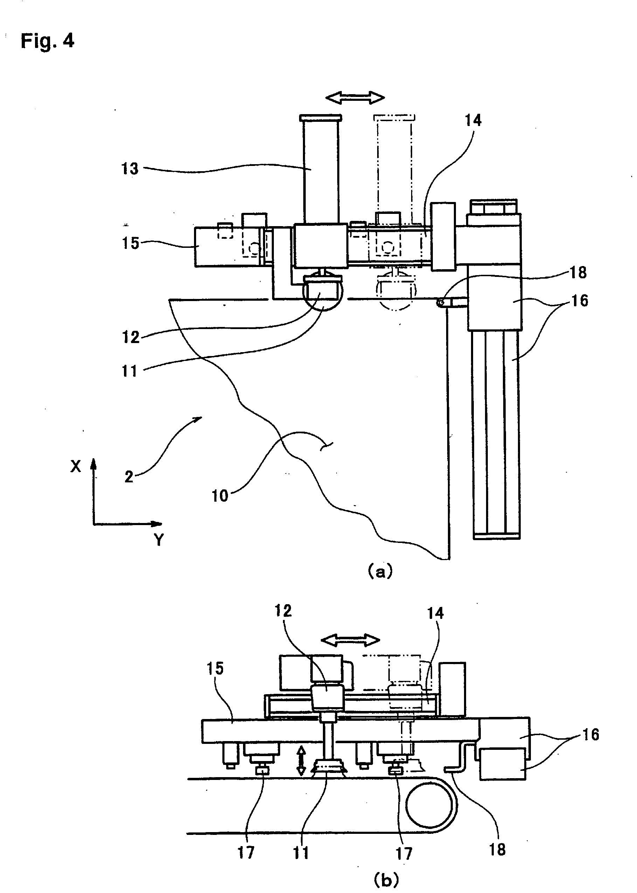

Fig. 4 shows the alignment unit 2 disposed on an upstream end of the cutting system 1. In the system 1, first of all, the belt conveyor 10 carries-in the glass plate G onto the alignment unit 2. In the alignment unit 2, a region near an end portion of the belt conveyor 10 serves as a glass receiver. The alignment unit 2 is provided with a suction pad 11 that suctions the glass plate G from above to lift up the glass plate G The suction pad 11 is attached to a rod of a vertical drive cylinder 12 so as to be vertically movable. The vertical drive cylinder (hereinafter referred to as a vertical cylinder) 12 is mounted to a rod of a X-axis-direction drive cylinder (hereinafter referred to as a X-cylinder) 13 so as to be movable back and forth in the X-axis-direction. The X-cylinder 13 is mounted to a Y-axis-direction direct-advance actuator 14 including a servo motor and a ball screw which are not shown. The Y-axis-direction direct-advance actuator 14 cause the X cylinder 13 to move in the Y-axis-direction. The Y-axis-direction direct-advance actuator 14 is mounted to a frame 15 extending in the Y-axis-direction. The frame 15 is mounted to the X-axis-direction direct-advance actuator 16 so as to be movable in the X-axis-direction. In such a construction, the suction pad 11 is caused to move in two stages in the X-axis-direction by the X-cylinder 13 and the X-axis-direction direct-advance actuator 16, to move in the Y-axis-direction by the Y-axis-direction direct-advance actuator 14, and to move up and down by the vertical cylinder 12.

Positioning rollers 17, namely, two stoppers, are mounted to a lower surface of the frame 15 extending in the Y-axis-direction to be aligned in the Y-axis-direction (in parallel with a machine center which is a center line of the unit). The positioning rollers 17 are caused to move in the X-axis-direction together with the X cylinder 13. When the suction pad 11 that has suctioned the glass plate G is moved upward in Fig. 4(a) by the X cylinder 13, an upper end of the glass plate G comes into contact with the positioning rollers 17, allowing the glass plate G to be positioned in the X-axis-direction. Upon the contact of the upper end of the glass plate G with the positioning rollers 17, the movement of the X cylinder 13 is stopped. The positions of the positioning rollers 17 in the X-axis-direction are pre-stored in the controller 100 according to a size of the glass plate G to be processed. Based on a signal from the controller 100, the X-axis-direction direct-advance actuator 16 transports the positioning rollers 17 and the suction pad 11 into predetermined positions.

In this embodiment, the suction pad 11 is rotatable around a center axis thereof. This makes it possible to cause the glass plate G to contact the plurality of positioning rollers 17 to enable an imaginary center line of the glass plate G to be parallel to the machine center even if the glass plate G is carried-in to the alignment unit 2 in a tilted state within a horizontal plane.

A sensor 18 is attached on the X-axis-direction direct-advance actuator 16 to position the glass plate G in the Y-axis-direction. The sensor 18 is movable only in the X-axis-direction by the X-axis-direction direct-advance actuator 16 but is not movable in the Y-axis-direction. When the sensor 18 detects the front end of the glass plate G, the Y-axis-direction direct-advance actuator 14 stops driving. A sensor 15a attached on the lower surface of the frame 15 serves to detect that the glass plate G reached the stoppers 17.

In this manner, the glass plate G is placed correctly in a stop position in the Y-axis-direction with a center position of a width in the Y-axis-direction of the glass plate G which is a reference position conforming to a reference position (e.g., machine center) of the system 1. The positioned glass plate G is conveyed to the X-axis-direction trimming unit 4 by the Y-axis-direction conveyance device 8 as described below.

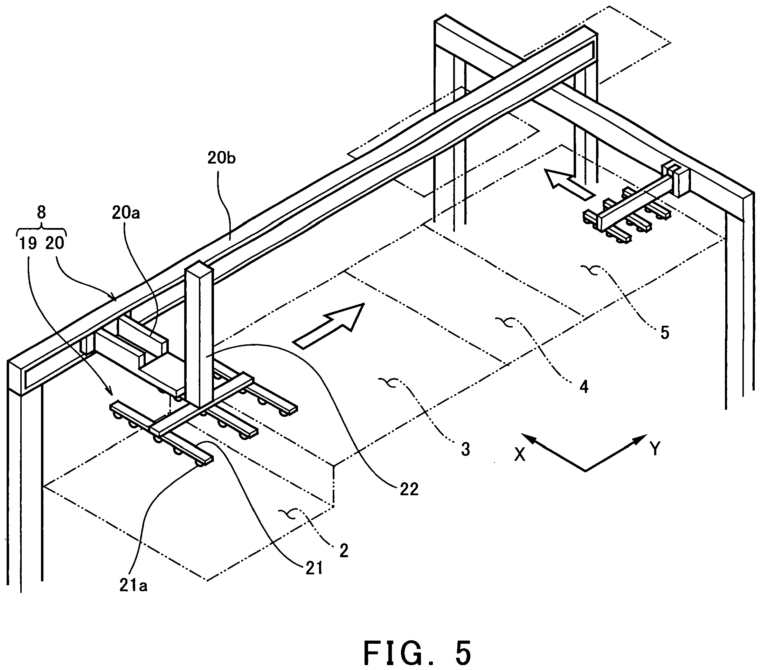

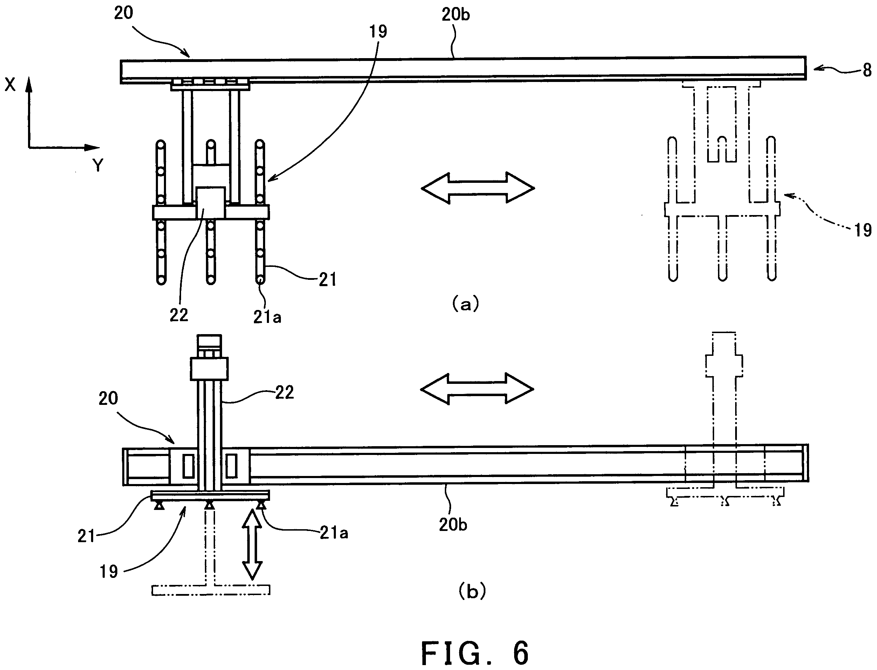

Figs. 5 and 6 illustrate the Y-axis-direction conveyance device 8. The Y-axis-direction conveyance device 8 includes a holding unit 19 that holds the glass plate G and a Y-axis-direction direct-advance actuator 20 that transports the holding unit 19 in the Y-axis-direction. The Y-axis-direction direct-advance actuator 20 uses a servo motor and a timing belt feeder which are not shown. The holding unit 19 includes a pad frame 21 on which a plurality suction pads 21a are arranged to suction the glass plate G from above, and a drive cylinder 22 that moves up and down the pad frame 21. The pad frame 21 is attached to a rod of the drive cylinder 22. The drive cylinder 22 is mounted to an arm 20a extending horizontally from the Y-axis-direction direct-advance actuator 20. The Y-axis-direction direct-advance actuator 20 causes the holding unit 19 to move straight ahead from the alignment unit 2 to the Y-axis-direction venting unit 5 through the X-axis-direction trimming unit 3. The moving distance is pre-stored in the controller 100 according to the size and a venting position of the glass plate G to be processed. According to the count of pulse signals from the encoder, the controller 100 causes the servo motor to rotate in a predetermined manner. Typically, a rail 20b of the Y-axis-direction direct-advance actuator 20 extends in parallel with the machine center.

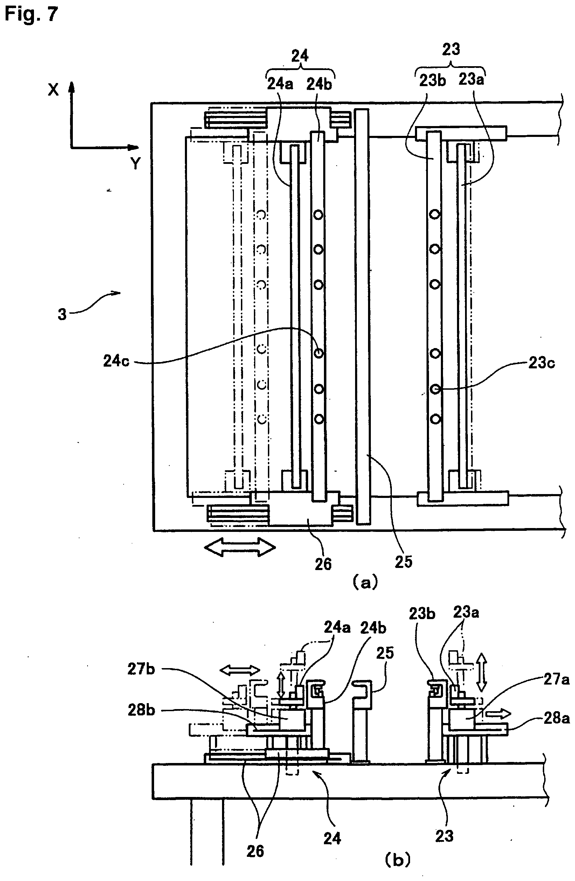

Fig. 7 shows the X-axis-direction trimming unit 3. The X-axis-direction trimming unit 3 serves to vent and remove selvage portions of the front end and the rear end of the glass plate G A pair 23 consisting of a venting element 23a and a support element 23b is disposed at a front portion of the X-axis-direction trimming unit 3. A pair 24 consisting of a venting element 24a and a support element 24b is disposed at a rear portion of the X-axis-direction trimming unit 3. These pairs constitute a venting unit. Suction holes 23c are formed on an upper surface of the support element 23b and suction holes 24c are formed on an upper surface of the support element 24b to allow the glass plate G placed thereon to be immobilized. A receiver bar 25 is disposed between the pairs 23 and 24 to support an intermediate portion of the glass plate G from below. The rear pair 24 is mounted to the Y-axis-direction direct-advance actuator 26 to be movable to a position of the X-axis-direction scribe lines (La of Fig. 3(a)) according to the size of the glass plate G The venting elements 23a and 24a are moved up and down by drive cylinders 27a and 27b, respectively, and are moved in the Y-axis-direction close to and away from the support elements 23b and 24b by the actuators 28a and 28b, respectively.

While the Y-axis-direction conveyance device 8 is conveying the glass plate G to the X-axis-direction trimming unit 3, the venting elements 23a and 24a are placed in a lower position and away from the support elements 23b and 24b. When the glass plate G is placed on the support elements 23b and 24b and the receiver bar 25, the suction pads (not shown) attached to the support elements 23b and 24b cause the glass plate G to be immobilized. In this case, the Y-axis-direction conveyance device 8 causes the glass plate G to be placed so that the scribe lines of the glass plate G are in predetermined positions with respect to the support elements 23a and 24b. The positions of the scribe lines are pre-input as a trimming width of the glass plate G to be vented. The controller 100 controls a moving distance of the Y-axis-direction conveyance device 8 with respect to the positions of the scribe lines.

Then, the venting elements 23a and 24a move up close to the support elements 23b and 24b and then move down to vent the edge portions of the glass plate G For example, the front pair 23a and 23b vent the glass plate G in such a manner that the support element 23a and the venting element 23b act on the opposite sides of the glass plate G with respect to the scribe lines from vertically opposite directions to apply a bending moment to vent the glass plate G The rear pair 24a and 24b operate in the same manner. To be specific, the support element 23b supports a lower surface of one side of the opposite sides of the glass plate G and the venting element 23a pushes down an upper surface of the other side to apply the bending moment to the glass plate G Suction pads (not shown) are attached to side surface of the venting elements 23a and 24a on the side of the support elements 23b and 24b. The suction pads suction the vent selvage portions, remove them from the protection film and carry them to a predetermined place. Such a trimming unit is disclosed in detail in Japanese Laid-Open Patent Application Publication No. 2001-221047 which is a patent application of the applicant of the subject application.

After the front and rear trimming, the protection film bonded to the lower surface of the glass plate G is removed by the film removing unit 4 located adjacent the X-axis-direction trimming unit 3.

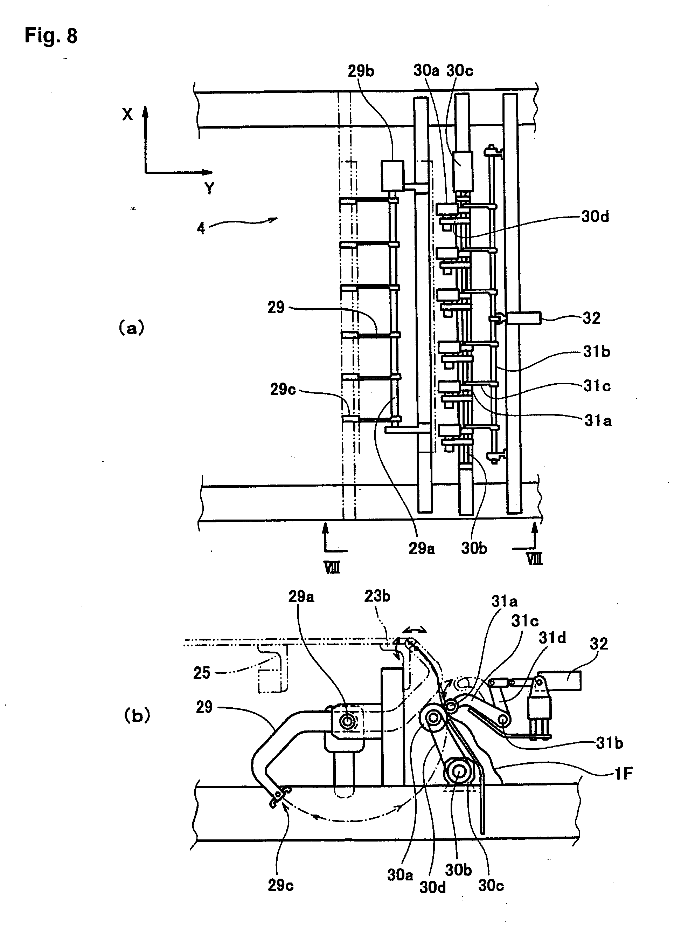

Fig. 8 shows the film removing unit 4. The film removing unit 4 is provided with a rotational shaft 29a that is located obliquely downward of the front support element 23b to extend in the X-axis-direction and is configured to rotate clockwise and counterclockwise by a motor 29b, and a plurality of (e.g., six) pivot arms 29 attached to the rotational shaft 29a to be spaced apart from one another. A pinch element 29c is attached to a tip end of each pivot arm 29 to pinch the film F. Forward of the rotational shaft 29a, a plurality of (e.g., six) feed rollers 30a are disposed to be spaced apart from each other in the X-axis-direction, and a plurality of (e.g., six) pinch rollers 31a are disposed to move into contact with and away from the feed rollers 30a. Under the respective feed rollers 30a, a rotational shaft 30b is disposed to rotate the feed rollers 30a and a motor 30c is disposed to rotate the rotational shaft 30b. A plurality of (e.g., six) timing belts 30d are installed between the feed rollers 30a and the rotational shaft 30b. The pinch rollers 31a are attached to tip ends of pinch arms 31c fixed to the rotational shaft 31b. The rotational shaft 31b is rotated by a drive force transmitted from a drive cylinder 32 through a fixed lever 31d. Each pivot arm 29 pivots between adjacent feed rollers 30a. A pivot track curve plane (cylindrical plane) of each pinch element 29c passes through a region between the feed roller 30a and the pinch roller 31a.

According to the film removing unit 4, first, the pivot arms 29 pivot to cause the pinch elements 29c to move close to the front end of the glass plate G placed on the X-axis-direction trimming unit 3. Then, the pinch elements 29c pinch a dangling font end of the film F which results from removal of the selvage portion from the glass plate G. Then, the feed rollers 30a rotate and the Y-axis-direction conveyance device 8 suctions and lifts up the glass plate G to convey the glass plate G. Simultaneously, the pivot arms 29 pivot downward. Upon the film F passing through the region between the feed rollers 30a and the pinch rollers 31a, the pinch rollers 31a cause the film F to be pinched between the pinch rollers 31a and the feed rollers 30a. The pinch elements 29c open to release the film F. The feed rollers 30a rotate to remove the film F from the entire lower surface of the glass plate G The Y-axis-direction conveyance device 8 conveys the glass plate G to the Y-axis-direction venting unit 5 located adjacent. The glass plate G from which the front and rear ends have been trimmed and the protection film on the lower surface have been removed, is placed on the Y-axis-direction venting unit 5. The glass plate G is not displaced in the X-axis-direction while the X-axis-direction conveyance device 8 is conveying the glass plate G from the alignment unit 2 to the Y-axis-direction venting unit 5.

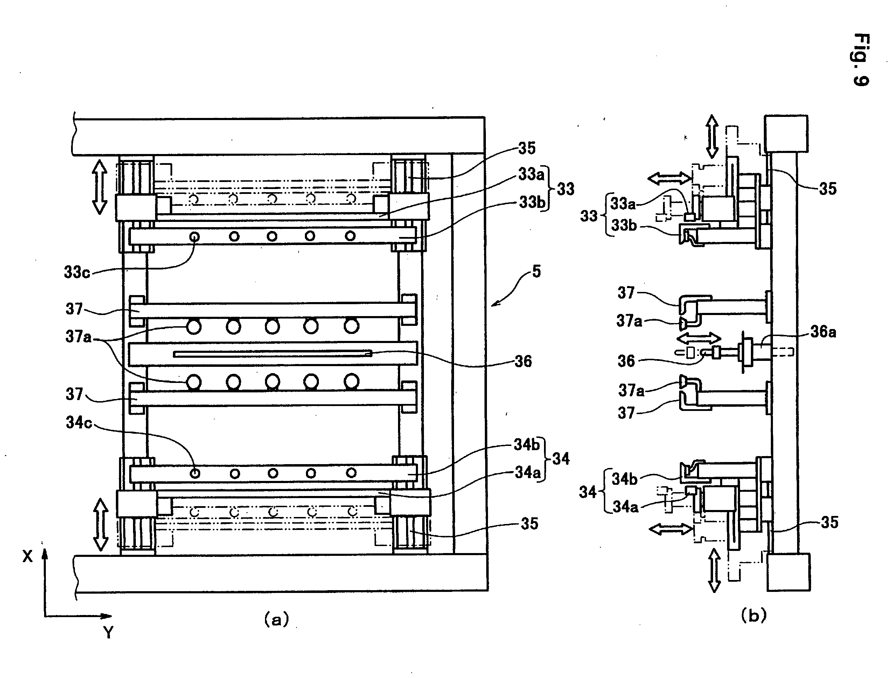

Fig. 9 shows the Y-axis-direction venting unit 5. The Y-axis-direction venting unit 5 includes, on a left side, a pair 33 consisting of a venting element 33a and a support element 33b and extending in the Y-axis-direction, and, on a right side, a pair 34 consisting of a venting element 34a and a support element 34b and extending in the Y-axis-direction. Suction holes 33c are formed on an upper surface of the support element 33b and suction holes 34c are formed on an upper surface of the support element 34b to enable the glass plate G placed thereon to be immobilized. The pairs 33 and 34 are moved in the X-axis-direction by the X-axis-direction direct-advance actuator 35 so that the pairs 33 and 34 are in predetermined positions with respect to the trimming scribe lines (reference symbol Lb in Fig. 3(a)) of the glass plate G Since the structures and operations of the venting elements 33a and 34a and the support elements 33b and 34b are identical to those of the venting elements 23a and 24a and the support elements 23b and 24b in the X-axis-direction trimming unit, they will not be further described.

A venting bar 36 is disposed between the left pair 33 and the right pair 34 so as to extend in the Y-axis-direction. In this embodiment, the venting bar 36 is positioned to conform to the machine center of the unit. The venting bar 36 is vertically moved by a drive cylinder 36a. Support bars 37 are disposed on opposite sides of the venting bar 36 to extend in parallel with the venting bar 36 and serves to support the glass plate G from below. Each support bar 37 is provided with a plurality of suction members 37a that suction the lower surface of the glass plate G to hold it. The glass plate G is placed on the support elements 33b and 34b and the support bar 37 so that the venting scribe line (reference symbol Lin Fig. 3) is positioned right above the support bar 37 and is immobilized by the suction members 37a. Under this condition, by moving the venting bar 36 upward, a region of the glass plate G, corresponding to the scribe line L, is pushed up, and thus the glass sheet G is vented.

The venting bar 36 and the support bars 37 are fixed to the frame 5a of the unit 5 not to move in the horizontal direction. Therefore, the glass plate G is positioned by the alignment unit 2 so that the venting scribe line L conforms to the machine center. Alternatively, the venting bar 36 and the support bar 37 are easily configured to be movable together in the X-axis-direction by a rodless cylinder or the like. This makes it possible to handle a plurality of glass plates having venting scribe lines L formed at different positions which are conveyed sequentially.

The X-axis-direction conveyance device 9 conveys the glass plate G that has been subjected to the trimming of right and left ends and division in two in the Y-axis-direction venting unit 5, to the inspection unit 6.

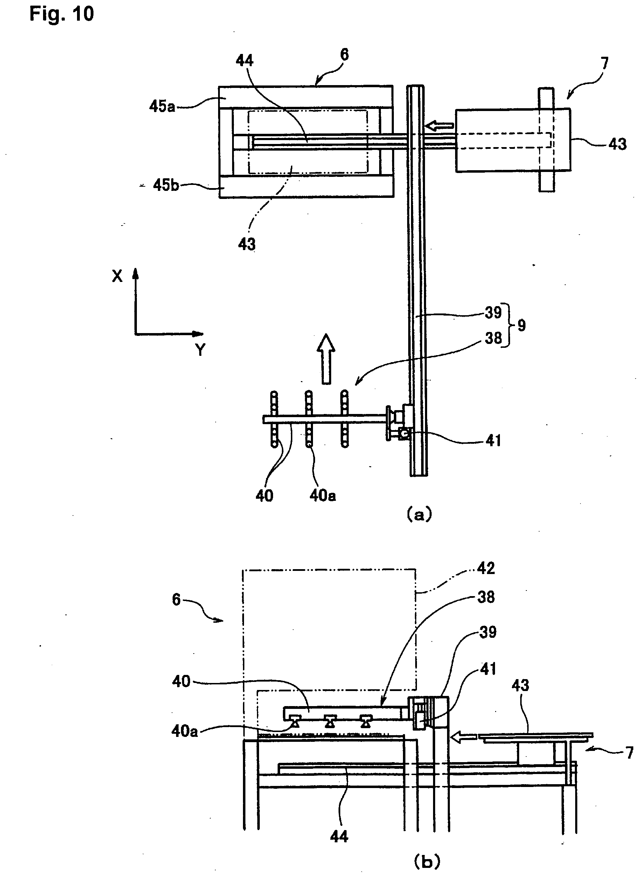

Fig. 10 shows the X-axis-direction conveyance device 9 and the inspection unit 6. Fig. 5 shows the X-axis-direction conveyance device 9 along with the Y-axis-direction conveyance device 8. The X-axis-direction conveyance device 9 includes a holding unit 38 for holding the glass plate G and a X-axis-direction direct-advance actuator 39 that transports the holding unit 38 in the X-axis-direction. The X-axis-direction direct-advance actuator 39 employs a servo motor and a timing belt feeder which are not shown. The holding unit 38 includes a pad fame 40 on which a plurality of suction pads 40a are arranged to suction the glass plate G from above and a drive cylinder 41 that moves the pad frame 40 up and down. The pad frame 40 is attached to a rod of the drive cylinder 41. The drive cylinder 41 is mounted to an arm 39a extending horizontally from the X-axis-direction direct-advance actuator 39. The X-axis-direction direct-advance actuator 39 causes the holding unit 38 to move straight ahead from the Y-axis-direction venting unit 5 to the inspection unit 6. The moving distance is pre-stored in the controller 100 according to the size of the glass plate G to be processed. According to the count of pulse signals from the encoder, the controller 100 causes the servo motor to rotate in a predetermined manner.

As shown in Fig. 10, the inspection unit 6 is positioned to be spaced apart in X-axis-direction from the Y-axis-direction venting unit 5. The inspection unit 6 includes a receiver 43 on which the glass plate G is placed, and a dark room 42 disposed above the receiver 43. The dark room 42 contains an image processing camera which is not shown to determine whether or not there is a mark indicating a position of a flaw and the like of the glass plate G placed on the receiver 43. A carry-out position 7 is set to be spaced apart from the receiver 43 in the Y-axis-direction. An actuator 44 for causing the receiver 43 to move to and away from the carry-out position 7 is disposed under the X-axis-direction direct-advance actuator 39 so as not to contact the actuator 39. As shown in Fig. 10, a pair of fixed plates 45a and 45b are attached on right and left sides of the receiver 43 to enable the glass plate G to be placed on the receiver 43 between the plates 43. The receiver 43 moves to a region between the fixed plates 45a and 45b, and the glass plate G is placed onto the receiver 43. After whether or not the glass plate G has the mark is determined, it is conveyed to the carry-out position 7.

A handling robot which is not shown is installed in the vicinity of the carry-out position 7. Receiving inspection result information from the inspection unit 6, the controller 100 instructs the handling robot to operate according to this inspection result. Receiving the instruction, the handling robot puts defective products on the carry-out position 7 into a defective product box, and transports good glass plates to a conveyor or the like for carrying them to a next stage.

Whereas the servo direct-advance actuator employs the servo motor and the timing belt in this embodiment, the present invention is not limited to this. For example, the actuator may employ the servo motor and a ball screw as a feeder.

### Industrial applicability

In accordance with the present invention, since the alignment unit positioned upstream in the glass plate cutting system positions the glass plate, it is not necessary to re-position the glass plate in processing units in downstream stages. Therefore, the present invention contributes to improvement of processing efficiency of the whole cutting system.

## Claims

1. A glass plate cutting system comprising:
an alignment unit configured to position a glass plate with respect to the cutting system in a Y-axis-direction in which the glass plate is conveyed and in a X-axis-direction perpendicular to the Y-axis-direction in a substantially horizontal plane;
a X-axis-direction trimming unit configured to trim front and rear ends of the glass plate;
a Y-axis-direction venting unit configured to trim opposite sides of the glass plate and to vent the glass plate along a venting scribe line formed on the glass plate; and
a Y-axis-direction conveyance device configured to convey the glass plate from the alignment unit to the X-axis-direction trimming unit and the Y-axis-direction venting unit, in the direction in which the glass plate is conveyed in the cutting system;
wherein the Y-axis-direction conveyance device includes a first holding unit that holds the glass plate and a first servo transport unit that transports the first holding unit;
wherein the first holding unit includes a vacuum suction pad that suctions a surface of the glass plate and an up-down element that moves up and down the suction pad, and
wherein the first servo transport unit includes a rail extending in parallel with a machine center in the Y-axis-direction extending through the alignment unit, and is configured to transport the first holding unit straight ahead from the alignment unit to the Y-axis-direction venting unit through the X-axis-direction trimming unit in a state in which the glass plate is lifted by the first holding unit; and
wherein the alignment unit and the Y-axis-direction venting unit have a common reference line extending in the Y-axis-direction.

2. The glass plate cutting system according to claim 1, wherein the first servo transport unit includes a servo motor and a feeder configured to be driven by the servo motor.

## Patentansprüche

1. Glasplattenschneidsystem, das umfasst:
eine Ausrichteinheit, die dazu konfiguriert ist, eine Glasplatte in Bezug auf das Schneidsystem in einer Y-Achsenrichtung, in der die Glasplatte befördert wird, und in einer senkrecht zu der Y-Achsenrichtung verlaufenden X-Achsenrichtung in einer im Wesentlichen horizontalen Ebene anzuordnen;
eine X-Achsenrichtungs-Zuschneideinheit, die dazu konfiguriert ist, vordere und hintere Enden der Glasplatte zuzuschneiden;
eine Y-Achsenrichtungs-Entlüftungseinheit, die dazu konfiguriert ist, gegenüber liegende Seiten der Glasplatte zuzuschneiden und die Glasplatte entlang einer auf der Glasplatte ausgebildeten Entlüftungsritzlinie zu entlüften; und
eine Y-Achsenrichtungs-Fördervorrichtung, die dazu konfiguriert ist, die Glasplatte von der Ausrichteinheit zu der X-Achsenrichtungs-Zuschneideinheit und der Y-Achsenrichtungs-Entlüftungseinheit zu befördern, in der Richtung, in der die Glasplatte in dem Schneidsystem befördert wird;
wobei die Y-Achsenrichtungs-Fördervorrichtung eine erste Halteeinheit umfasst, die die Glasplatte hält, und eine erste Servotransporteinheit, die die erste Halteeinheit transportiert;
wobei die erste Halteeinheit einen Saugnapf, der eine Oberfläche der Glasplatte ansaugt, und ein Auf-Ab-Element, das den Saugnapf auf und ab bewegt, umfasst, und
wobei die erste Servotransporteinheit eine Schiene umfasst, die sich parallel zu einer Maschinenmitte in der sich durch die Ausrichteinheit erstreckenden Y-Achsenrichtung erstreckt und dazu konfiguriert ist, die erste Halteeinheit von der Ausrichteinheit geradeaus durch die X-Achsenrichtungs-Zuschneideinheit zu der Y-Achsenrichtungs-Entlüftungseinheit zu transportieren in einem Zustand, in dem die Glasplatte durch die erste Halteeinheit angehoben wird; und
wobei die Ausrichteinheit und die Y-Achsenrichtungs-Entlüftungseinheit eine gemeinsame Referenzlinie haben, die sich in der Richtung der Y-Achse erstreckt.

2. Glasplattenschneidsystem nach Anspruch 1, wobei die erste Servotransporteinheit einen Servomotor und eine Zuführeinrichtung umfasst, die dazu konfiguriert ist, von dem Servomotor angetrieben zu werden.

## Revendications

1. Système de découpe de plaque de verre comprenant :
une unité d'alignement conçue pour positionner une plaque de verre par rapport au système de découpe dans le sens de l'axe des Y dans lequel la plaque de verre est acheminée, et dans le sens de l'axe des X qui est perpendiculaire au sens de l'axe des Y dans un plan sensiblement horizontal,
une unité de rognage dans le sens de l'axe des X conçue pour rogner les extrémités avant et arrière de la plaque de verre,
une unité d'aération dans le sens de l'axe des Y conçue pour rogner les bords opposés de la plaque de verre et pour aérer la plaque de verre le long d'une ligne de marquage d'aération tracée sur la plaque de verre, et
un dispositif d'acheminement dans le sens de l'axe des Y conçu pour acheminer la plaque de verre, de l'unité d'alignement vers l'unité de rognage dans le sens de l'axe des X et l'unité d'aération dans le sens de l'axe des Y, dans le sens dans lequel la plaque de verre est acheminée dans le système de découpe ;
ledit dispositif d'acheminement dans le sens de l'axe des Y comportant une première unité de retenue qui retient la plaque de verre, et une première unité de transport servomotorisée qui transporte la première unité de retenue,
ladite première unité de retenue comportant un plateau-ventouse qui retient par effet ventouse une surface de la plaque de verre, et un élément de montée-descente qui fait monter et descendre le plateau-ventouse, et
ladite première unité de transport servomotorisée comportant un rail s'étendant parallèlement au centre de la machine dans le sens de l'axe des Y et traversant l'unité d'alignement, et est conçue pour transporter la première unité de retenue vers l'avant, de l'unité d'alignement vers l'unité d'aération dans le sens de l'axe des Y en passant par l'unité de rognage dans le sens de l'axe des X, la plaque de verre étant soulevée par la première unité de retenue ; et
ladite unité d'alignement et ladite unité d'aération dans le sens de l'axe des Y présentant une ligne de référence commune qui s'étend dans le sens de l'axe des Y.

2. Système de découpe de plaque de verre selon la revendication 1, dans lequel la première unité de transport servomotorisée comporte un servomoteur et un dispositif d'amenée conçu pour être entraîné par le servomoteur.
